Europäisches Patentamt

**European Patent Office**

Office européen des brevets

(11) Veröffentlichungsnummer: **0 266 499**
**B1**

(12) **EUROPÄISCHE PATENTSCHRIFT**

(45) Veröffentlichungstag der Patentschrift:
**13.12.89**

(21) Anmeldenummer: **87111627.3**

(22) Anmeldetag: **11.08.87**

(51) Int. Cl.⁴: **G01D 5/38**

(54) **Lichtelektrische Längen- oder Winkelmesseinrichtung.**

(30) Priorität: **29.10.86 DE 3636744**

(43) Veröffentlichungstag der Anmeldung:
**11.05.88 Patentblatt 88/19**

(45) Bekanntmachung des Hinweises auf die Patenterteilung:
**13.12.89 Patentblatt 89/50**

(84) Benannte Vertragsstaaten:
**AT CH DE ES FR GB IT LI NL SE**

(56) Entgegenhaltungen:
**DE-A- 3 003 533**
**FR-A- 2 321 682**

(73) Patentinhaber: **DR. JOHANNES HEIDENHAIN GMBH,**
**Fraunhofer Strasse 2-4 Postfach 1260,**
**D-8225 Traunreut(DE)**

(72) Erfinder: **Michel, Dieter, Dipl.-Ing.(FH),**
**Langauenstrasse 12, D-8220 Traunstein(DE)**

ACTORUM AG

**Beschreibung**

Die Erfindung betrifft eine lichtelektrische Längen- oder Winkelmeßeinrichtung gemäß dem Oberbegriff des Anspruchs 1.

Derartige Positionsmeßeinrichtungen werden insbesondere bei Bearbeitungsmaschinen zur Messung der Relativlage eines Wekzeugs bezüglich eines zu bearbeitenden Werkstücks sowie bei Koordinatenmeßmaschinen zur Ermittlung von Lage und/oder Abmessungen von Prüfobjekten eingesetzt.

In der Dissertation "Dreigitterschrittgeber" von Jörg Willhelm, 1978, (TU Hannover) ist im Abschnitt 2.4.1. eine Auflichtmeßeinrichtung beschrieben, bei der die Teilung eines Teilungsträgers von einer Abtasteinheit abgetastet wird, die eine Lichtquelle, einen Kondensor, eine Abtastplatte mit einer Abtastteilung, ein Objektiv und ein Photoelement enthält. Die vom Kondensor parallel gerichteten Lichtstrahlen der Lichtquelle durchsetzen die Abtastteilung der Abtastplatte und werden von der Teilungsebene mit der Teilung des Teilungsträgers wieder durch die Abtastteilung der Abtastplatte und durch das Objektiv auf das Photoelement reflektiert. Aus dem vom Photoelement bei der Meßbewegung erzeugten periodischen Abtastsignal werden in einer Auswerteeinrichtung mit einem Trigger und einem Zähler die Meßwerte für die gegenseitige Relativlage zweier verschiebbarer Objekte ermittelt, die jeweils mit dem Teilungsträger und der Abtasteinheit verbunden sind.

Im Abschnitt 4.7 dieser Dissertation ist ausgeführt, daß Ebenheitsfehler der Teilungsebene mit der Teilung des Teilungsträgers sowie Führungsfehler des Teilungsträgers oder der Abtasteinheit zu Meßfehlern führen können; diese Meßfehler fallen insbesondere bei interferometrischen Auflichtmeßeinrichtungen (DE-CI 3 541 199, veröffentlicht 25. 6. 87, der Anmelderin) stärker ins Gewicht, bei denen größere Abtastabstände zwischen der Teilungsebene des Teilungsträgers und der Abtastteilungsebene der Abtastplatte vorgesehen sind (Abschn. 4.5, S. 61 und 62).

Der Erfindung liegt die Aufgabe zugrunde, eine lichtelektrische Meßeinrichtung der genannten Gattung anzugeben, bei der derartige Fehler keinen Einfluß auf die Meßgenauigkeit haben.

Diese Aufgabe wird erfindungsgemäß durch die kennzeichnenden Merkmale des Anspruchs 1 gelöst.

Die mit der Erfindung erzielten Vorteile bestehen insbesondere darin, daß mit einfachen Mitteln bei auftretenden Meßfehlern stets der wahre Meßwert ermittelt wird. Eine Vermessung und Kalibrierung einer derartigen Positionsmeßeinrichtung sowie das Vorsehen von Fehlerkorrekturtabellen oder Fehlerkorrekturschablonen können somit entfallen. Eine beliebige Änderung der Position und des Betrages der auftreten den Meßfehler im Laufe der Zeit hat keinen Einfluß auf die Meßgenauigkeit. Es brauchen somit an die Führungen der mit der Meßeinrichtung verbundenen zu messenden Objekte sowie an die Ebenheit der Anbauflächen für die Meßeinrichtung an den Objekten keine hohen Anforderungen gestellt zu werden.

Vorteilhafte Ausbildungen der Erfindung entnimmt man den Unteransprüchen.

Ausführungsbeispiele der Erfindung werden anhand der Zeichnung näher erläutert.

Es zeigen

Figur 1 das Prinzip einer lichtelektrischen inkrementalen Längenmeßeinrichtung in einer Seitenansicht und

Figur 2 in einem Querschnitt in vergrößerter Darstellung;

Figur 3 einen ersten schematischen Lichtstrahlenverlauf;

Figur 4 einen zweiten schematischen Lichtstrahlenverlauf;

Figur 5a in schematischer Darstellung eine erste Längenmeßeinrichtung in einer Seitenansicht und

Figur 5b in einem Querschnitt;

Figur 6 in schematischer Darstellung eine zweite Längenmeßeinrichtung im Querschnitt und

Figur 7 in schematischer Darstellung eine dritte Längenmeßeinrichtung.

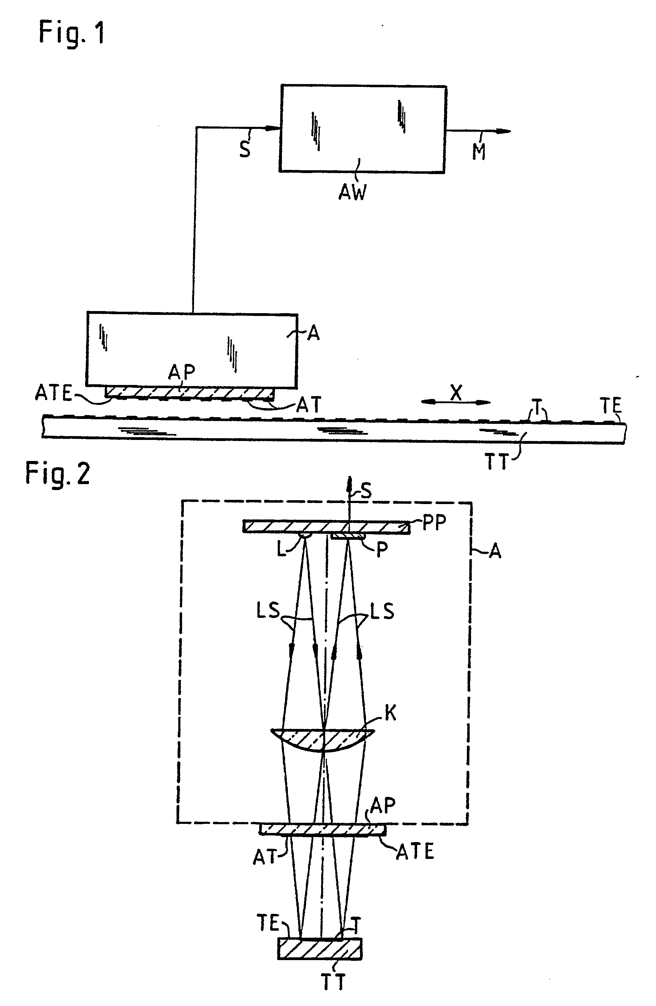

In Figur 1 ist das Prinzip einer lichtelektrischen inkrementalen Längenmeßeinrichtung in einer Seitenansicht und in Figur 2 in einem Querschnitt in vergrößerter Darstellung gezeigt. Eine inkrementale Teilung T in einer Teilungsebene TE eines metallischen Teilungsträgers TT wird von einer Abtasteinheit A berührungsfrei im Auflicht abgetastet. Der Teilungsträger TT und die Abtasteinheit A sind in nicht dargestellter Weise jeweils mit zwei verschiebbaren Objekten verbunden, deren gegenseitige Relativlage gemessen werden soll; die beiden Objekte können beispielsweise durch einen Schlitten und das Bett einer Bearbeitungsmaschine gebildet sein.

Fig. 2: Zur Abtastung der Teilung T des Teilungsträgers TT werden in der Abtasteinheit A die von einer Lichtquelle L aufgehenden Lichtstrahlen LS durch einen Kondensor K parallel gerichtet, durchsetzen eine Abtastteilungsebene ATE mit einer Abtastteilung AT einer transparenten Abtastplatte AP und werden von der Teilungsebene TE mit der Teilung T des Teilungsträgers TT durch die Abtastteilung AT der Abtastplatte AP auf ein Photoelement P einer Photoelementenplatte PP reflektiert. Die Abtastteilung AT der Abtastplatte AP stimmt mit der Teilung T des Teilungsträgers TT überein. Das Photoelement P der Photoelementenplatte PP liefert bei der Meßbewegung in Meßrichtung X durch die Modulation der Lichtstrahlen LS durch die Teilung T und die Abtastteilung AT ein periodisches Abtastsignal S, das einer Auswerteeinrichtung AW mit einem Impulsformerstufe und einem Zähler zugeführt wird; der Meßwert für die gegenseitige Relativlage der beiden verschiebbaren Objekte kann in nicht gezeigter Weise einer Anzeigeeinheit oder der Steuerung der Bearbeitungsmaschine zugeleitet werden.

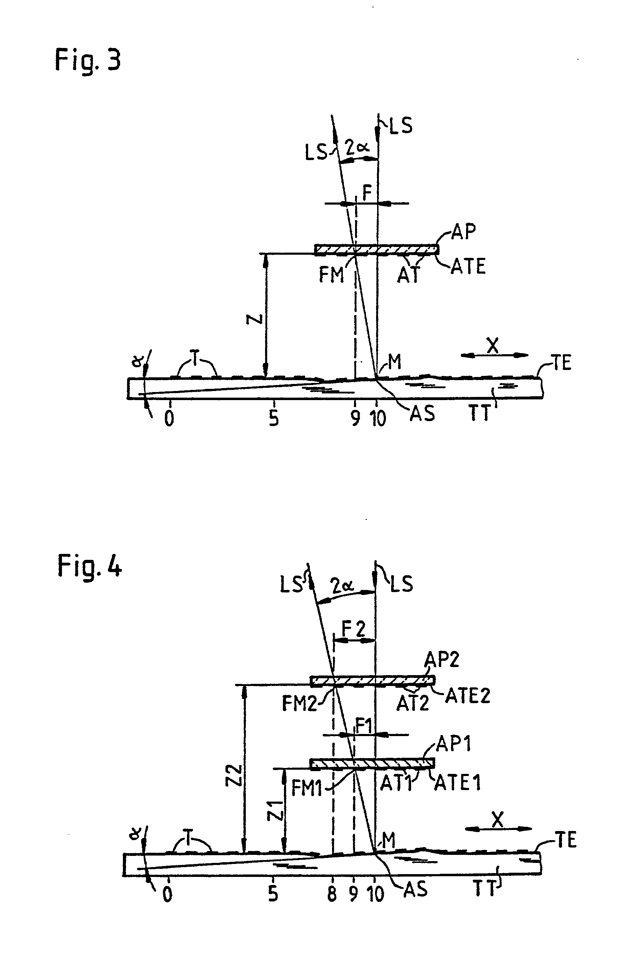

Figur 3 zeigt einen ersten schematischen Lichtstrahlenverlauf bei einer derartigen Längenmeßeinrichtung. Die Teilungsebene TE mit der Teilung T des Teilungsträgers TT besitzt an einer Abtaststelle AS eine Unebenheit, die mit der Teilungsebene TE einen

Winkel $\alpha$ einschließt. Demzufolge wird der von der Lichtquelle L einfallende Lichtstrahl LS nicht in seine Einfallsebene senkrecht zur Meßrichtung X von der Teilungsebene TE des Teilungsträgers TT reflektiert, sondern der reflektierte Lichtstrahl LD schließt mit dem einfallenden Lichtstrahl LS einnen Winkel $2\alpha$ in Meßrichtung X ein. Die Abtastteilungsebene ATE mit der Abtastteilung AT der Abtastplatte AP besitzt einen Abtastabstand z von der parallelen Teilungsebene TE mit der Teilung T des Teilungsträgers TT. Somit wird bei der Abtastung der Teilung T des Teilungsträgers TT an der Abtaststelle AS mittels der Abtastteilung AT nicht der wahre Meßwert M, sondern ein fehlerhafter Meßwert FM erhalten; die Differenz zwischen dem wahren Meßwert M und dem fehlerhaften Meßwert FM ergibt den Meßfehler $F = M - FM = 2\alpha z$. Als Zahlenbeispiel wäre an der Abtaststelle AS des von einem Nullpunkt 0 ab bezifferten Teilungsträgers TT der wahre Meßwert M = 10; ermittelt wird jedoch der fehlerhafte Meßwert FM = 9, so daß der Meßfehler F = 1 vorliegt.

Zur Eliminierung dieses Meßfehlers F wird erfindungsgemäß nach Figur 4 vorgeschlagen, zur Teilungsebene TE mit der Teilung T des Teilungsträgers TT in einem ersten Abtastabstand z1 in Lichtstrahlenrichtung eine erste Abtastteilungsebene ATE1 mit einer ersten Abtastteilung AT1 einer ersten Abtastplatte AP1 und in einem zweiten Abtastabstand z2 in Lichtstrahlenrichtung eine zweite Abtastteilungsebene ATE2 mit einer zweiten Abtastteilung AT2 einer zweiten Abtastplatte AP2 anzuordnen.

Anhand des zweiten schematischen Lichtstrahlenverlaufs nach Figur 4 schließt in Übereinstimmung mit Figur 3 der an der Abtaststelle AS reflektierte Lichtstrahl LS mit dem einfallenden Lichtstrahl LS den gleichen Winkel $2\alpha$ in Meßrichtung X ein. Somit werden bei der Abtastung der Teilung T des Teilungsträgers TT und der Abtaststelle AS ebenfalls nicht der wahre Meßwert M, sondern mittels der ersten Abtastteilung AT1 ein erster fehlerhafter Meßwert FM1 und mittels der zweiten Abtastteilung AT2 ein zweiter fehlerhafter Meßwert FM2 erhalten; die Differenz zwischen dem wahren Meßwert M und dem ersten fehlerhaften Meßwert FM1 ergeben den ersten Meßfehler $F1 = M - FM1 = 2\alpha z1$ und die Differenz zwischen dem wahren Meßwert M und dem zweiten fehlerhaften Meßwert FM2 den zweiten Meßfehler $F2 = M - FM2 = 2\alpha z2$.

Aus dem ersten fehlerhaften Meßwert FM1 und dem zugehörigen ersten Abtastabstand z1 sowie aus dem zweiten fehlerhaften Meßwert FM2 und dem zugehörigen zweiten Abtastabstand z2 kann nun der wahre Meßwert M rechnerisch ermittelt werden. Aus den geometrischen Verhältnissen der Figur 4 folgt:

$$F1/z1 = F2/z2 \rightarrow F1 = F2 \cdot z1/z2$$
$$M = FM1 + F1 = FM1 + F2 \cdot z1/z2$$
$$M = FM2 + F2 \rightarrow F2 = M - FM2$$
$$M = FM1 + (M - FM2) \cdot z1/z2$$
$$M = FM1 + M \cdot z1/z2 - FM2 \cdot z1/z2$$
$$M(1 - z1/z2) = FM1 - FM2 \cdot z1/z2$$
$$M = (FM1 - FM2 \cdot z1/z2) / (1 - z1/z2) \quad (1)$$

Für z2 = 2z1 folgt
$$M = 2FM1 - FM2 \quad (2)$$

Als Zahlenbeispiel wäre an der Abtaststelle AS des vom Nullpunkt 0 ab bezifferten Teilungsträgers TT der wahre Meßwert M = 10; ermittelt wird jedoch mittels des ersten Abtastteilung AT1 der ersten Abtastplatte AP1 der erste fehlerhafte Meßwert FM1 = 9 und mittels der zweiten Abtastteilung AT2 der zweiten Abtastplatte AP2 der zweite fehlerhafte Meßwert FM2 = 8. Mit z2 = 2z1 ergibt sich somit aus Gleichung (2) der wahre Meßwert $M = 2FM1 - FM2 = 2 \cdot 9-8 = 10$.

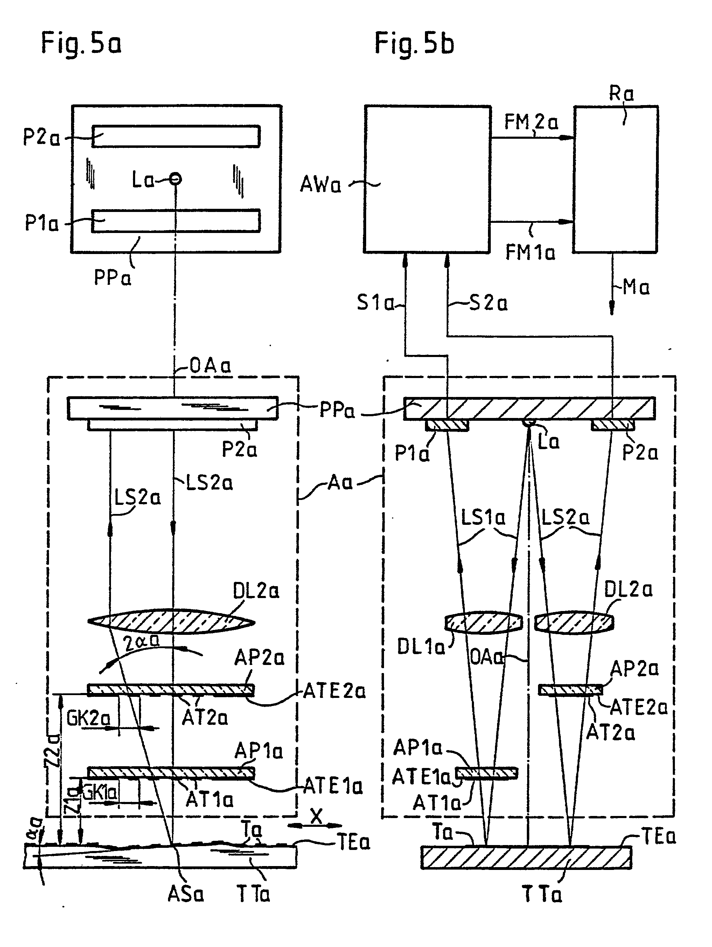

In Figur 5a ist in schematischer Darstellung eine erste lichtelektrische inkrementale Längenmeßeinrichtung in einer Seitenansicht und in Figur 5b in einem Querschnitt gezeigt, bei der eine inkrementale Teilung Ta in einer Teilungsebene TEa eines metallischen Teilungsträgers TTa von einer Abtasteinheit Aa berührungsfrei im Auflicht abgetastet wird. Parallel zur Teilungsebene TEa des Teilungsträgers TTa sind in einem ersten Abtastabstand z1a eine erste Abtastteilungsebene ATE1a mit einer ersten Abtastteilung AT1a einer ersten Abtastplatte AP1a und in einem zweiten Abtastabstand z2a eine zweite Abtastteilungsebene ATE2a mit einer zweiten Abtastteilung AT2a einer zweiten Abtastplatte AP2a angeordnet; die beiden Abtastplatten AP1a, AP2a sind quer zur Meßrichtung X symmetrisch zur optischen Achse OAa des Strahlenverlaufs gegeneinander versetzt. Der ersten Abtastplatte AP1a sind eine erste dezentrierte Linse DL1a sowie ein erstes Photoelement P1a auf einer Photoelementenplatte PPa und der zweiten Abtastplatte AP2a eine zweite dezentrierte Linse DL2a sowie ein zweites Photoelement P2a auf der Photoelementenplatte PPa zugeordnet. Über der Figur 5a ist die Photoelementenplatte PPa in die Zeichnungsebene geklappt dargestellt.

Von einer in der optischen Achse OAa des Strahlenganges auf der Photoelementenplatte PPa angeordneten Lichtquelle La durchsetzt nach Figur 5b ein erster Lichtstrahl LS1a die erste dezentrierte Linse DL1a und die erste Abtastteilungsebene ATE1a mit der ersten Abtastteilung AT1a der ersten Abtastplatte AP1a und wird von der Teilungsebene TEa mit der Teilung Ta des Teilungsträgers TTa wieder durch die erste Abtastteilungsebene ATE1a mit der ersten Abtastteilung AT1a der ersten Abtastplatte AP1a und durch die erste dezentrierte Linse DL1a auf das erste Photoelement P1a der Photoelementenplatte PPa reflektiert. Von der Lichtquelle La durchsetzt ein zweiter Lichtstrahl LS2a die zweite dezentrierte Linse DL2a und die zweite Abtastteilungsebene ATE2a mit der zweiten Abtastteilung AT2a der zweiten Abtastplatte AP2a und wird von der Teilungsebene TEa mit der Teilung Ta des Teilungsträgers TTa wieder durch die zweite Abtastteilungsebene ATE2a mit der zweiten Abtastteilung AT2a der zweiten Abtastplatte AP2a und durch die zweite dezentrierte Linse DL2a auf das zweite Photoelement P2a der Photoelementenplatte PPa reflektiert, so daß das erste Photoelement P1a ein erstes periodisches Abtastsignal S1a und das zweite Photoelement P2a ein zweites periodisches Abtastsignal S2a liefern. Die beiden periodischen Abtastsignale S1a, S2a werden in einer Auswerteeinrichtung AWa jeweils einer Impulsformerstufe und einem nachgeschalteten Zähler zur Bildung eines ersten fehlerhaften Meßwertes FM1a und eines zweiten fehlerhaften Meßwertes FM2a zugeführt, die einen Rechner Ra beaufschlagen.

Die Teilungsebene TEa mit der Teilung Ta des Teilungsträgers TTa besitzt an einer Abtaststelle ASa eine Unebenheit, die mit der Teilungsebene TEa einen Winkel αa nach Figur 5a einschließt. Demzufolge werden die von der Lichtquelle La einfallenden beiden Lichtstrahlen LS1a, LS2a nicht in ihrer Einfallsebene senkrecht zur Meßrichtung X von der Teilungsebene TEa des Teilungsträgers TTa reflektiert, sondern die beiden reflektierten Lichtstrahlen LS1a, LS2a schließen mit den beiden einfallenden Lichtstrahlen LS1a, LS2a einen Winkel 2αa in Meßrichtung X ein. Somit werden bei der Abtastung der Teilung Ta des Teilungsträgers TTa an der Abtaststelle ASa nicht der wahre Meßwert Ma, sondern mittels der ersten Abtastteilung AT1a der erste fehlerhafte Meßwert FM1a und mittels der zweiten Abtastteilung AT2a der zweite fehlerhafte Meßwert FM2a erhalten. Aus den beiden fehlerhaften Meßwerten FM1a, FM2a ermittelt der Rechner Ra mit der obigen Gleichung (1) den wahren Meßwert Ma.

Wenn der erste Abtastabstand z1a und der zweite Abtastabstand z2a ein Verhältnis z2a = 2z1a aufweisen, kann der wahre Meßwert Ma vom Rechner Ra aus der obigen Gleichung (2) Ma = 2FM1a - FM2a berechnet werden. Besitzen die erste Gitterkonstante GK1a der ersten Abtastteilung AT1a und die zweite Gitterkonstante GK2a der zweiten Abtastteilung AT2a das Verhältnis GK2a = 2GK1a, so vereinfacht sich Gleichung (2) zur Gleichung (2a) Ma = FM1a - FM2a. In diesem Fall werden die beiden Zähler in der Auswerteeinrichtung AWa durch ein Differenzzähler ersetzt und der Rechner Ra kann entfallen.

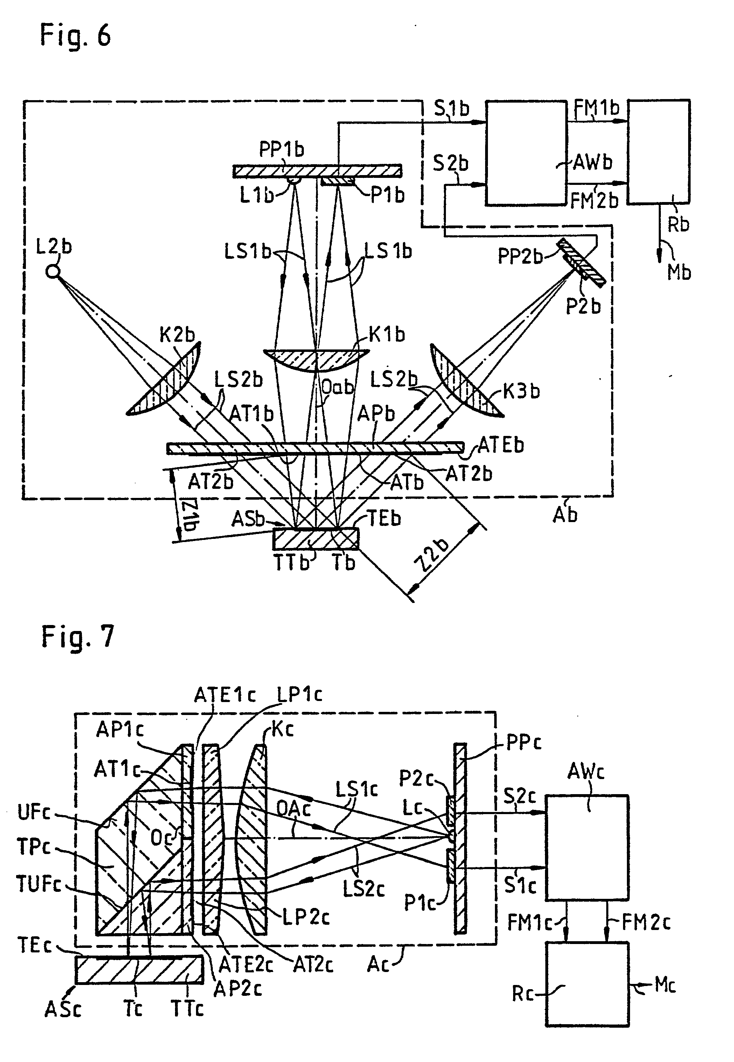

In Figur 6 ist in schematischer Darstellung eine zweite lichtelektrische inkrementale Längenmeßeinrichtung im Querschnitt gezeigt, bei der eine inkrementale Teilung Tb in einer Teilungsebene TEb eines metallischen Teilungsträgers TTb von einer Abtasteinheit Ab berührungsfrei im Auflicht abgetastet wird. Parallel zur Teilungsebene TEb des Teilungsträgers TTb ist eine Abtastteilungsebene ATEb mit einer Abtastteilung ATb einer Abtastplatte APb angeordnet. Der Abtastplatte APb ist ein erster Kondensor K1b und eine erste Photoelementenplatte PP1b mit einer ersten Lichtquelle L1b und einem ersten Photoelement P1b zugeordnet; die erste Lichtquelle L1b und das erste Photoelement P1b sind in der Einfallsebene senkrecht zur Meßrichtung X zu beiden Seiten der optischen Achse OAb des Strahlenganges angeordnet. Die von der ersten Lichtquelle L1b ausgehenden ersten Lichtstrahlen LS1b durchsetzen den ersten Kondensor K1b und eine erste Abtastteilung AT1b im Mittenbereich der Abtastteilung ATb der Abtastplatte APb und werden von der Teilungsebene TEb des Teilungsträgers TTb wieder durch die erste Abtastteilung AT1b der Abtastplatte APb und den ersten Kondensor K1b auf das erste Photoelement P1b reflektiert. Der Abstand zwischen der Teilungsebene TEb des Teilungsträgers TTb und der ersten Abtastteilung AT1b im Mittenbereich der Abtastteilung ATb in Richtung der ersten Lichtstrahlen LS1b bildet den ersten Abtastabstand z1b.

In der Einfallsebene senkrecht zur Meßrichtung X ist auf der linken Seite der ersten Lichtquelle L1b eine zweite Lichtquelle L2b mit einem zweiten Kondensor K2b angeordnet. Die von der zweiten Lichtquelle L2b ausgehenden zweiten Lichtstrahlen LS2b durchsetzen den zweiten Kondensor K2b und eine zweite Abtastteilung AT2b im linken Seitenbereich der Abtastteilung ATb der Abtastplatte APb und werden von der Teilungsebene TEb des Teilungsträgers TTb durch eine zweite Abtastteilung AT2b im rechten Seitenbereich der Abtastteilung ATb der Abtastplatte APb und einen dritten Kondensor K3b auf ein zweites Photoelement P2b einer zweiten Photoelementenplatte PP2b reflektiert. Der Abstand zwischen der Teilungsebene TEb des Teilungsträgers TTb und der zweiten Abtastteilung AT2b in den beiden Seitenbereichen der Abtastteilung ATb der Abtastplatte APb in Richtung der zweiten Lichtstrahlen LS2b bildet einen zweiten Abtastabstand z2b. Die von den beiden Photoelementen P1b, P2b erzeugten beiden periodischen Abtastsignale S1b, S2b werden einer Auswerteeinrichtung AWb zur Lieferung der beiden fehlerhaften Meßwerte FM1b, FM2b zugeführt, die einen Rechner Rb zur Ermittlung des wahren Meßwertes Mb beaufschlagen. Die erste Abtastteilung AT1b im Mittenbereich und die beiden zweiten Abtastteilungen AT2b in den beiden Seitenbereichen der Abtastteilung ATb der Abtastplatte APb sind identisch.

Die Teilungsebene TEb mit der Teilung Tb des Teilungsträgers TTb besitzt an einer Abtaststelle ASb eine Unebenheit, die mit der Teilungsebene TEb einen Winkel αb einschließt. Demzufolge werden die von den beiden Lichtquellen L1b, L2b einfallenden Lichtstrahlen LS1b, LS2b nicht in ihrer Einfallsebene senkrecht zur Meßrichtung X von der Teilungsebene TEb des Teilungsträgers TTb reflektiert, sondern die reflektierten Lichtstrahlen LS1b, LS2b schließen mit den einfallenden Lichtstrahlen LS1b, LS2b einen Winkel 2αb in Meßrichtung X (analog zum Winkel 2αa der Figur 5a) ein. Somit werden bei der Abtastung der Teilung Tb des Teilungsträgers TTb an der Abtaststelle ASb nicht der wahre Meßwert Mb, sondern mittels der ersten Abtastteilung AT1b der erste fehlerhafte Meßwert FM1b und mittels der zweiten Abtastteilung AT2b der zweite fehlerhafte Meßwert FM2b erhalten. Aus den beiden fehlerhaften Meßwerten FM1b, FM2b ermittelt der Rechner Rb mit der obigen Gleichung (1) den wahren Meßwert Mb.

Wenn der erste Abtastabstand Z1b und der zweite Abtastabstand z2b ein Verhältnis z2b = 2z1b aufweisen, kann der wahre Meßwert Mb vom Rechner Rb aus der obigen Gleichung (2) Mb = 2FM1b - FM2b berechnet werden.

In Figur 7 ist in schematischer Darstellung eine dritte lichtelektrische inkrementale Längenmeßeinrichtung im Querschnitt gezeigt, bei der eine inkrementale Teilung Tc in einer Teilungsebene TEc eines metallischen Teilungsträgers TTc von einer Abtasteinheit Ac berührungsfrei im Auflicht abgetastet wird. Senkrecht zur Teilungsebene TEc des Teilungsträgers TTc sind eine erste Abtastplatte AP1c mit einer ersten Abtastteilung AT1c in einer ersten Abtastteilungsebene ATE1c und eine zweite Abtastplatte AP2c mit einer zweiten Abtastteilung AT2c in einer zweiten Abtastteilungsebene ATE2c angeordnet; die beiden Abtastplatten AP1c, AP2c sind nebeneinander parallel zur Meßrichtung X auf einer Oberfläche Oc eines Teilerumlenkprismas TPc befestigt. Der ersten Abtastplatte AP1c sind ein erstes Ablenkprisma LP1c und ein erstes Photoelement P1c auf einer Photoelementenplatte PPc und der zweiten Abtastplatte AP2c ein zweites Ablenkprisma LP2c und ein zweites Photoelement P2c auf der Photoelementenplatte PPc symmetrisch zur optischen Achse OAc des Strahlenganges zugeordnet. Von einer auf der optischen Achse OAc des Strahlenganges auf der Photoelementenplatte PPc angeordneten Lichtquelle LC durchsetzt ein erster Lichtstrahl LS1c einen Kondensor Kc, das erste Ablenkprisma LP1c und die erste Abtastteilungsebene ATE1c mit der ersten Abtastteilung AT1c der ersten Abtastplatte AP1c und wird von der Umlenkfläche UFc des Teilerumlenkprismas TPc durch dessen Teilerumlenkfläche TUFc auf die Teilungsebene TEc mit der Teilung Tc des Teilungsträgers TTc umgelenkt; die Teilungsebene TEc des Teilungsträgers TTc reflektiert den ersten Lichtstrahl LS1c wieder durch die Teilerumlenkfläche TUFc und über die Umlenkfläche UFc des Teilerumlenkprismas TPc, durch die erste Abtastteilungsebene ATE1c mit der ersten Abtastteilung AT1c der ersten Abtastplatte AP1c, durch das erste Ablenkprisma LP1c und durch den Kondensor Kc auf das erste Photoelement P1c der Photoelementenplatte PPc. Von der Lichtquelle Lc durchsetzt ein zweiter Lichtstrahl LS2c den Kondensor Kc, das zweite Ablenkprisma LP2c und die zweite Abtastteilungsebene ATE2c mit der zweiten Abtastteilung AT2c der zweiten Abtastplatte AP2c und wird von der Teilerumlenkfläche TUFc des Teilerumlenkprismas TPc auf die Teilungsebene TEc mit der Teilung Tc des Teilungstäger TTc umgelenkt; die Teilungsebene TEc des Teilungstägers TTc reflektiert den zweiten Lichtstrahl LS2c wieder über die Teilerumlenkfläche TUFc des Teilerumlenkprismas TPc, durch die zweite Abtastteilungsebene ATE2c mit der zweiten Abtastteilung AT2c der zweiten Abtastplatte AP2c, durch das zweite Ablenkprisma LP2c und durch den Kondensor Kc auf das zweite Photoelement P2c der Photoelementenplatte PPc. Der Abstand zwischen der Teilungsebene TEc des Teilungsträgers TTc und der ersten Abtastteilung AT1c der ersten Abtastplatte AP1c in Richtung des ersten Lichtstrahls LS1c bilden einen ersten Abtastabstand z1c und der Abstand zwischen der Teilungsebene TEc des Teilungsträgers TTc und der zweiten Abtastteilungsebene ATE2c der zweiten Abtastplatte AP2c in Richtung des zweiten Lichtstrahls LS2c den zweiten Abtastabstand z2c. Der erste wirksame Abstand z1c (in der Figur 7 nicht eingetragen) ist die Summe des optischen Weges des ersten Lichtstrahls LS1c von der Teilungsebene TEc des Teilungsträgers TTc bis zur Umlenkfläche UFc des Teilerumlenkprismas TPc und des optischen Weges des ersten Lichtstrahls LS1c von der Umlenkfläche UFc des Teilerumlenkprismas TPc bis zur ersten Abtastteilungsebene ATE1c der ersten Abtastplatte AP1c unter Berücksichtigung der entsprechenden Brechungsindizes. Der zweite wirksame Abstand z2c (in der Figur 7 nicht dargestellt) ist die Summe des optischen Weges des zweiten Lichtstrahls LS2c von der Teilungsebene TEc des Teilungsträgers TTc bis zur Teilerumlenkfläche TUFc des Teilerumlenkprismas TPc und des optischen Weges des zweiten Lichtstrahls LS2c von der Teilerumlenkfläche TUFc des Teilerumlenkprismas TPc bis zur zweiten Abtastteilungsebene ATE2c der zweiten Abtastplatte AP2c unter Berücksichtigung der entsprechenden Brechungsindizes.

Die von den beiden Photoelementen P1c, P2c erzeugten beiden periodischen Abtastsignale S1c, S2c werden einer Auswerteeinrichtung AWc zur Lieferung der beiden fehlerhaften Meßwerte FM1c, FM2c zugeführt, die einen Rechner Rc zur Ermittlung des wahren Meßwertes Mc beaufschlagen.

Die Teilungsebene TEc mit der Teilung Tc des Teilungsträger TTc besitzt an einer Abtaststelle ASc eine Unebenheit, die mit der Teilungsebene TEc einen Winkel $\alpha c$ einschließt. Demzufolge werden die von der Lichtquelle Lc einfallenden beiden Lichtstrahlen LS1c, LS2c nicht in ihrer Einfallsebene senkrecht zur Meßrichtung X von der Teilungsebene TEc des Teilungsträgers TTc reflektiert, sondern die beiden reflektierten Lichtstrahlen LS1c, LS2c schließen mit den beiden einfallenden Lichtstrahlen LS1c, LS2c einen Winkel $2\alpha c$ in Meßrichtung X (analog zum Winkel $2\alpha a$ der Figur 5a) ein. Somit werden bei der Abtastung der Teilung TC des Teilungsträgers TTc an der Abtaststelle ASc nicht der wahre Meßwert Mc, sondern mittels der ersten Abtastteilung AT1c der erste fehlerhafte Meßwert FM1c und mittels der zweiten Abtastteilung AT2c der zweite fehlerhafte Meßwert FM2c erhalten. Aus den beiden fehlerhaften Meßwerten FM1c, FM2c ermittelt der Rechner Rc mit der obigen Gleichung (1) den wahren Meßwert Mc.

Wenn der erste Abtastabstand z1c und der zweite Abtastabstand z2c ein Verhältnis z2c = 2z1c aufweisen, kann der wahre Meßwert Mc vom Rechner Rc aus der obigen Gleichung (2) Mc = 2FM1c - FM2c berechnet werden. Besitzen die erste Gitterkonstante GK1c der ersten Abtastteilung AT1c und die zweite Gitterkonstate GK2c der zweiten Abtastteilung AT2c das Verhältnis GK2c = 2GK1c, so vereinfacht sich Gleichung (2) zur Gleichung (2a) Mc = FM1c - FM2c. In diesem Fall werden die beiden Zähler in der Auswerteeinrichtung AWc durch einen Differenzzähler ersetzt und der Rechner RC kann entfallen.

Derartige fehlerhafte Meßwerte treten beispielsweise bei lokalen Unebenheiten der Teilungsebene des Teilungsträgers, bei Verbiegungen der Teilungsebene durch die Befestigung des Teilungsträgers an einer unebenen Anbaufläche am zu messenden Objekt und durch Verkippungen des Teilungsträgers durch Führungsfehler in der Führung der zu messenden Objekte auf. Diese fehlerhaften Meßwerte können auch bei einer Winkelmeßeinrichtung mit einer Trommelteilung auftreten, bei der sich die Teilung auf einer Außenfläche oder Innenfläche beispielsweise eines Hohlyzlinders befindet, wenn die Teilungsfläche mit dieser Trommelteilung Abweichungen von der Zylinderform aufweist.

Die Erfindung ist sowohl bei lichtelektrischen inkrementalen als auch bei absoluten Längen- oder Winkelmeßeinrichtungen mit Erfolg einsetzbar.

**Patentansprüche**

1. Lichtelektrische Längen- oder Winkelmeßeinrichtung zur Messung der Relativlage zweier Objekte, bei der die Teilung eines mit dem einen Objekt verbundenen Teilungsträgers von einer mit dem anderen Objekt verbundenen Abtasteinheit im Auflicht abgetastet wird, dadurch gekennzeichnet, daß in der Abtasteinheit (A) wenigstens zwei Abtastteilungen (AT1, AT2) mit unterschiedlichen Abtastabständen (z1, z2) in Lichtstrahlenrichtung zur Teilung (T) des Teilungsträgers (TT) angeordnet sind und daß aus den mittels der wenigstens zwei Abtastteilungen (AT1, AT2) erzeugten wenigstens zwei Meßwerten (FM1, FM2) der wahre Meßwert (M) ermittelbar ist.

2. Meßeinrichtung nach Anspruch 1, dadurch gekennzeichnet, daß parallel zur Teilungsebene (TEa) mit der Teilung (Ta) des Teilungsträgers (TTa) eine erste Abtastteilungsebene (ATE1a) mit einer ersten Abtastteilung (AT1a) einer ersten Abtastplatte (AP1a) in einem ersten Abtastabstand (z1a) und eine zweite Abtastteilungsebene (ATE2a) mit einer zweiten Abtastteilung (AT2a) einer zweiten Abtastplatte (AP2a) in einem zweiten Abtastabstand (z2a) senkrecht zur Meßrichtung (X) versetzt angeordnet sind und daß der ersten Abtastteilung (AT1a) eine erste dezentrierte Linse (DL1a) sowie ein erstes Photoelement (P1a) und der zweiten Abtastteilung (AT2a) eine zweite dezentrierte Linse (DL2a) sowie ein zweites Photoelement (P2a) symmetrisch zur senkrecht zur Teilungsebene (TEa) des Teilungsträgers (TTa) verlaufenden optischen Achese (OAa) des Strahlenganges zugeordnet sind, wobei sich eine Lichtquelle (La) in der optischen Achese (OAa) des Strahlenganges befindet.

3. Meßeinrichtung nach Anspruch 1, dadurch gekennzeichnet, daß parallel zur Teilungsebene (TEb) mit der Teilung (Tb) des Teilungsträgers (TTb) eine Abtastteilungsebene (ATEb) mit einer Abtastteilung (ATb) einer Abtastplatte (APb) angeordnet ist, daß senkrecht zur Meßrichtung (X) symmetrisch zur senkrecht zur Teilungsebene (TEb) des Teilungsträgers (TTb) verlaufenden optischen Achse (OAb) des Strahlengangs der Mittenbereich der Abtastteilung (ATb) eine erste Abtastteilung (AT1b) und die beiden Seitenbereiche der Abtastteilung (ATb) zwei zweite Abtastteilungen (AT2b) bilden, daß der ersten Abtastteilung (AT1b) in einem ersten Abtastabstand (z1b) in Lichtstrahlenrichtung von der Teilungsebene (TEb) des Teilungsträgers (TTb) ein erster Kondensor (K1b) sowie eine erste Lichtquelle (L1b) und ein erstes Photoelement (P1b) zugeordnet sind und daß der einen zweiten Abtastteilung (AT2b) ein zweiter Kondensor (K2b) sowie eine zweite Lichtquelle (L2b) und der anderen zweiten Abtastteilung (AT2b) ein dritter Kondensor (K3b) sowie ein zweites Photoelement (P2b) zugeordnet sind, wobei der Abstand der zweiten Abtastteilung (AT2b) in Lichtstrahlenrichtung von der Teilungsebene (TEb) des Teilungsträgers (TTb) einen zweiten Abtastabstand (z2b) bildet.

4. Meßeinrichtung nach Anspruch 1, dadurch gekennzeichnet, daß senkrecht zur Teilungsebene (TEc) des Teilungsträgers (TTc) symmetrisch zur senkrecht zur Meßrichtung (X) und parallel zur Teilungsebene (TEc) des Teilungsträgers (TTc) verlaufenden optischen Achse (OAc) des Strahlengangs eine erste Abtastteilungsebene (ATE1c) mit einer ersten Abtastteilung (AT1c) einer ersten Abtastplatte (AP1c) und eine zweite Abtastteilungsebene (ATE2c) mit einer zweiten Abtastteilung (AT2c) einer zweiten Abtastplatte (AP2c) angeordnet sind, daß der ersten Abtastteilung (AT1c) ein erstes Ablenkprisma (LP1c) sowie ein erstes Photoelement (P1c) und der zweiten Abtastteilung (AT2c) ein zweites Ablenkprisma (LP2c) sowie ein zweites Photoelement (P2c) zugeordnet sind, wobei die Lichtquelle (Lc) sich in der optischen Achse (OAc) des Strahlenganges befindet, und daß den beiden Abtastplatten (AP1c, AP2c) ein Teilerumlenkprisma (TPc) zugeordnet ist, wobei die Abstände der ersten Abtastteilung (AT1c) und der zweiten Abtastteilung (AT2c) in Lichtstrahlenrichtung von der Teilungsebene (TEc) des Teilungsträgers (TTc) einen ersten Abtastabstand (z1c) und einen zweiten Abtastabstand (z2c) bilden.

5. Meßeinrichtung nach Anspruch 1, dadurch gekennzeichnet, daß der wahre Meßwert (M) aus den erzeugten Meßwerten (FM1, FM2) nach der Gleichung (1)
$$M = (FM1 - FM2 \cdot z1/z2) / (1-z1/z2)$$
ermittelbar ist.

6. Meßeinrichtung nach den Anspruch 5, dadurch gekennzeichnet, daß bei einem Verhältnis z2 = 2 · z1 der beiden Abtastabstände (z1, z2) der wahre Meßwert (M) aus den erzeugten Meßwerten (FM1, FM2) nach der Gleichung (2)
$$M = 2 \cdot FM1 - FM2$$
ermittelbar ist.

7. Meßeinrichtung nach Anspruch 5, dadurch gekennzeichnet, daß bei einem Verhältnis z2 = 2 · z1 der beiden Abtastabstände (z1, Z2) und bei einem Verhältnis GK2 = 2 · GK1 der beiden Gitterkonstanten (GK1, GK2) der beiden Abtastteilungen (AT1, AT2) der wahre Meßwert (M) aus den erzeugten Meßwerten (FM1, FM2) nach der Gleichung (2a)
$$M = FM1 - FM2$$
ermittelbar ist.

8. Meßeinrichtung nach Anspruch 6, dadurch gekennzeichnet, daß zur Ermittlung des wahren Meßwertes (M) aus den erzeugten Meßwerten (FM1, FM2) nach den Gleichungen (1) und (2) ein Rechner (R) vorgesehen ist.

9. Meßeinrichtungen nach Anspruch 7, dadurch gekennzeichnet, daß zur Ermittlung des wahren Meßwertes (M) aus den erzeugten Meßwerten (FM1, FM2) nach Gleichung (2a) ein Differenzzähler vorgesehen ist.

## Claims

1. Opto-electric length or angle measuring device for measuring the relative position of two objects, in which the graduation of a graduation carrier connected to one of the objects is sensed in incident light by a sensing unit connected to the other object, characterized in that at least two sensing graduations (AT1, AT2) are arranged in the sensing unit (A) with differing sensing spacings (z1, z2) in the light ray direction from the graduation (T) of the graduation carrier (TT) and in that the true measured value (M) can be derived from the at least two measured values (FM1, FM2) developed by means of the at least two sensing graduations (AT1, AT2).

2. Measuring device according to claim 1, characterized in that, parallel to the graduation plane (TEa) with the graduation (Ta) of the graduation carrier (TTa) there is arranged a first sensing graduation plane (ATE1a) with a first sensing graduation (AT1a) of a first sensing plate (AP1a) at a first sensing distance (z1a) and a second sensing graduation plane (ATE2a) with a second sensing graduation (AT2a) of a second sensing plate (AP2a) at a second sensing distance (z2a), offset perpendicular to the measuring direction (X), and in that the first sensing graduation (AT1a) has associated therewith a first off-centre lens (DL1a) as well as a first photo-element (P1a) and the second sensing graduation (AT2a) has associated therewith a second off-centre lens (DL2a) and a second photo-element (P2a), symmetrically relative to the optic axis (OAa) of the ray paths running perpendicular to the graduation plane (TEa) of the graduation carrier (TTa), a light source (La) being located on the optic axis (OAa) of the ray paths.

3. Measuring device according to claim 1, characterized in that, parallel to the graduation plane (TEb) with the graduation (Tb) of the graduation carrier (TTb) there are arranged a sensing graduation plane (ATEb) with a sensing graduation (ATb) of a sensing plate (APb), in that, perpendicular to the measuring direction (X), symmetrically with respect to the optic axis (OAb) of the ray paths running perpendicular to the graduation plane (TEb) of the graduation carrier (TTb) the central region of the sensing graduation (ATb) forms a first sensing graduation (AT1b) and the two side regions of the sensing graduation (ATb) form two second sensing graduations (AT2b), in that the first sensing graduation (AT1b) at a first sensing spacing (z1b) in the light ray direction from the graduation plane (TEb) of the graduation carrier (TTb) has associated therwith a first condenser (K1b) as well a first light source (L1b) and a first photo-element (P1b) and in that there are associated with the one second sensing graduation (AT2b) a second condenser (K2b) and a second light source (L2b) and with the other second sensing graduation (AT2b) a third condenser (K3b) and a second photo-element (P2b), whereby the spacing of the second sensing graduation (AT2b) in the light ray direction from the graduation plane (TEb) of the graduation carrier (TTb) forms a second sensing spacing (z2b).

4. Measuring device according to claim 1, characterized in that, perpendicular to the graduation plane (TEc) of the graduation carrier (TTc), symmetrically with respect to the optical axis (OAc) of the ray paths running perpendicular to the measuring direction (X) and parallel to the graduation plane (TEc) of the graduation carrier (TTc), there are arranged a first sensing graduation plane (ATE1c) with a first sensing graduation (AT1c) of a first sensing plate (AP1c) and a second sensing graduation plane (ATE2c) with a second sensing graduation (AT2c) of a second sensing plate (AP2c), in that there are associated with the first sensing graduation (AT1c) a first deflecting prism (LP1c) and a first photo-element (P1c) and with the second sensing graduation (AT2c) a second deflecting prism (LP2c) as well as a second photo-element (P2c), the light source (Lc) being located on the optic axis (OAc) of the ray paths, and in that there is associated with the two sensing plates (AP1c, AP2c) one splitter deflecting prism (TPc), the spacing of the first sensing graduation (AT1c) and of the second sensing graduation (AT2c) in the light ray direction from the graduation plane (TEc) of the graduation carrier (TTc) forming a first sensing distance (z1c) and a second sensing distance (z2c).

5. Measuring device according to claim 1, characterized in that the true measured value (M) can be derived from the generated measured values (FM1, FM2) according to the equation (1)
$$M = (FM1 - FM2 \, z1/z2)/(1 - z1/z2).$$

6. Measuring device according to claim 5, characterized in that, with a relation $z2 = 2 \cdot z1$ of the two sensing distances (z1, z2), the true measured value (M) can be derived from the generated measured values (FM1, FM2) according to the equation (2)
$$M = 2 \cdot FM1 - FM2.$$

7. Measuring device according to claim 5, characterized in that, with a relation $z2 = 2 \cdot z1$ of the two sensing distances (z1, z2) and with a relation $GK2 = 2 \cdot Gk1$ of the two frid constants (GK1, GK2) of the two sensing graduations (AT1, AT2), the true measured value (M) can be derived from the generated measured values (FM1, FM2) according to the equation (2a)
$$M = FM1 - FM2.$$

8. Measuring device according to claim 6, characterized in that a computer (R) is provided for deriving the true measured value (M) from the generated measured values (FM1, FM2) according to the equations (1) and (2).

9. Measuring device according to claim 7, characterized in that a differential counter is provided for generating the true measured value (M) from the generated measured values (FM1, FM2) according to equation (2A).

## Revendications

1. Dispositif photo-électrique de mesure de longueurs ou d'angles, pour la mesure de la position relative de deux objets, dans lequel la division d'un support de division relié à un objet est explorée en lumière réfléchie par un élément d'exploration relié à l'autre objet, caractérisé en ce que, dans l'élément d'exploartion (A), au moins deux divisions d'exploration (AT1, AT2) sont disposées à des distances d'exploration différentes (z1, z2) dans la direction du rayon lumineux, par rapport à la division (T) du support de division (TT) et en ce que valeur de la mesure vraie (M) est susceptible d'être déterminées à partir des deux valeurs de mesure (FM1, FM2) au moins produites à l'aide des deux divisions d'exploration (AT1, AT2) au moins.

2. Dispositif de mesure selon la revendication 1, caractérisé en ce que, parallèlement au plan de division (TEa) portant la division (Ta) du support de division (TTa), un premier plan de division d'exploration (ATE1a) comportant une première division d'exploration (AT1a) d'une première plaque d'exploration (AP1a) est disposée à une première distance d'exploration (z1a) et un deuxième plan de division d'exploration (ATE2a) comportant une deuxième division d'exploration (AT2a) d'une deuxième plaque d'exploration (AP2a) est disposée à une deuxième distance d'exploration (z2a), deplacés l'un par rapport à l'autre perpendiculairement à la direction de mesure (X), et en ce qu'une première lentille décentrée (DL1a) ainsi qu'un premier photoélément (P1a) sont associées à la première division d'exploration (AT1a), et qu'une deuxième lentille décentrée (DL2a) ainsi qu'un deuxième photoélément (P2a) sont associés à la deuxième division d'exploration (AT2a), symétriquement à l'axe optique (OAa) de la marche des rayons, qui s'étend perpendiculairement au plan de division (TEa) du support de division (TTa), une source de lumière (La) se trouvant dans l'axe optique (OAa) de la marche des rayons.

3. Dispositif de mesure selon la revendication 1, caractérisé en ce qu'un plan de division d'exploration (ATEb) comportant une division d'exploration (ATb) d'une plaque d'exploration (APb) est disposé, parallèlement au plan de division (TEb) portant la division (Tb) du support de division (TTb), en ce que, perpendiculairement à la direction de mesure (X), symétriquement à l'axe optique (OAb) de la marche des rayons, qui s'étend perpendiculairement au plan de division (TEb) du support de division (TTb), la zone médiane de la division d'exploration (ATb) forme une première division d'exploration (AT1b) et les deux zones latérales de la division d'exploration (ATb) forment deux deuxièmes divisions d'exploration (AT2b), en ce qu'un premier condenseur (K1b) ainsi qu'une première source lumineuse (L1b) et un premier photoélément (P1b) sont associés à la première division d'exploration (AT1b) à une première distance d'exploration (z1b), dans la direction des rayons lumineux par rapport au plan de division (TEb) du support de division (TTb), et qu'un deuxième condenseur (K2b) ainsi qu'une deuxième source lumineuse (L2b) sont associés à l'une des deuxièmes divisions d'exploration (AT2b) et qu'un troisième condenseur (K3b), ainsi qu'un deuxième photoélément P2b sont associés à l'autre deuxième division d'exploration (AT2b), la distance de la deuxième division d'exploration (AT2b) dans la direction des rayons lumineux, par rapport au plan de division (TEb) du support de division (TTb) formant une deuxième distance d'exploration (z2b).

4. Dispositif de mesure selon la revendication 1, caractérisé en ce que, perpendiculairement au plan de division (TEc) du support de division (TTc) et symétriquement à l'axe optique (OAc) de la marche des rayons s'étendant perpendiculairement à la direction de mesure (X) et parallèlement au plan de division (TEc) du support de division (TTc), il sont disposés un premier plan de division d'exploration (ATE1c) comportant une première division d'exploration (AT1c) d'une première plaque d'exploration (AP1c) et un deuxième plan de division d'exploration (ATE2c) comportant une deuxième division d'exploration (AT2c) d'une deuxième plaque d'exploration (AP2c), en ce qu'un premier prisme déflecteur (LP1c) ainsi qu'un premier photoélément (P1c) sont associés à la première division d'exploration (AT1c) et en ce qu'un deuxième prisme déflecteur (LP2c) ainsi qu'un deuxième photoélément (P2c) sont associés à la deuxième division d'exploration (AT2c), la source lumineuse (Lc) se trouvant dans l'axe optique (OAc) de la marche des rayons, et en ce qu'un prisme déflecteur diviseur (TPc) est associé aux deux plaques d'exploration (AP1c, AP2c), les distances de la première division d'exploration (AT1c) et de la deuxième division d'exploration (AT2c) par rapport au plan de division (TEc) du support de division (TTc), dans la direction des rayons lumineux formant une première distance d'exploration (z1c) et une deuxième distance d'exploration (z2c).

5. Dispositif de mesure selon la revendication 1, caractérisé en ce que la valeur de mesure vraie (M) peut être déterminée à partir des valeurs de mesure produites (FM1, FM2), selon l'équation (1):

$$M = (FM1 - FM2 \cdot z1/z2) / (1 - z1/z2)$$

6. Dispositif de mesure selon la revendication 5, caractérisé en ce que, pour un rapport $z2 = 2 \cdot z1$ des deux distances d'exploration (z1, z2), la valeur de mesure vraie (M) peut être déterminée à partir des valeurs de mesure produites (FM1, FM2) selon l'équation (2):

$$M = 2 \cdot FM1 - FM2$$

7. Dispositif de mesure selon la revendication 5, caractérisé en ce que, pour un rapport $z2 = 2 \cdot z1$ des deux distances d'exploration (z1, z2) et pour un rapport $GK2 = 2 \cdot GK1$ des deux constantes de réseau (GK1, GK2) des deux divisions d'exploration (AT1, AT2), la valeur de mesure vraie (M) peut être déterminée à partir des valeurs de mesure produites (FM1, FM2) selon l'équation (2a):

$$M = FM1 - FM2$$

8. Dispositif de mesure selon la revendication 6, caractérisé en ce qu'un calculateur (R) est prévu dans le but d'obtenir la valeur de mesure vraie (M) à partir des valeurs de mesure produites (FM1, FM2), selon les équations (1) et (2).

9. Dispositif de mesure selon la revendication 7, caractérisé en ce qu'un compteur de différence est prévu dans le but d'obtenir la valeur de mesure vraie (M) à partir des valeurs de mesure produites (FM1, FM2), selon l'équation (2a).

Fig. 1

Fig. 2

Fig. 3

Fig. 4

Fig. 5a

Fig. 5b

EP 0 266 499 B1

## Fig. 6

## Fig. 7